# EUROPÄISCHE PATENTSCHRIFT

(11) **EP 3 859 848 B1**
(45) Veröffentlichungstag und Bekanntmachung des Hinweises auf die Patenterteilung: **12.04.2023**
(21) Anmeldenummer: 21151049.0
(22) Anmeldetag: 12.01.2021
(51) Int. Cl.: H01M 8/04029, B61C 3/00

(54) **SCHIENENFAHRZEUG MIT KÜHLEINRICHTUNG FÜR EINE BRENNSTOFFZELLENANORDNUNG**
RAIL VEHICLE WITH COOLING DEVICE FOR A FUEL CELL ASSEMBLY
VÉHICULE FERROVIAIRE POURVU DE DISPOSITIF DE REFROIDISSEMENT POUR UN AGENCEMENT DE PILE À COMBUSTIBLE

(30) Priorität: 30.01.2020 DE 102020201145
(43) Veröffentlichungstag der Anmeldung: 04.08.2021
(73) Patentinhaber: Siemens Mobility GmbH, 81739 München (DE)
(72) Erfinder: Brendel, Thomas, 40822 Mettmann (DE)
(74) Vertreter: Siemens Patent Attorneys

(56) Entgegenhaltungen:
- DE-A1-102013 009 749
- DE-A1-102016 110 964
- DE-C1- 19 850 829

## Beschreibung

Die Erfindung betrifft ein Schienenfahrzeug mit einer Kühleinrichtung für ein Brennstoffzellensystem, welches einer Versorgung einer Traktionseinrichtung des Schienenfahrzeugs mit elektrischer Energie dient.

Schienenfahrzeuge, die über eine fahrzeugexterne Energieversorgung, beispielsweise in Form einer Oberleitung oder einer dritten Schiene, mit elektrischer Energie versorgt werden, sind grundsätzlich auf eine vollständige Elektrifizierung des Streckennetzes angewiesen. Um diese Schienenfahrzeuge ergänzend auch auf nicht durchgängig elektrifizierten Strecken einsetzen zu können, werden diese zunehmend mit elektrischen Energiespeichern, so genannten Traktionsbatterien, ausgestattet. In diesen Traktionsbatterien gespeicherte elektrische Energie dient dabei der Versorgung von Antriebskomponenten und insbesondere Hilfsbetrieben des Schienenfahrzeugs während des Befahrens eines nicht elektrifizierten Streckenabschnitts. Ein Laden der Traktionsbatterien erfolgt beispielsweise während des Befahrens eines elektrifizierten Streckenabschnitts oder an speziellen Ladestationen, welche insbesondere im Bereich von Haltestellen angeordnet sein können.

Da Traktionsbatterien insbesondere aufgrund aktuell verfügbarer Speicherzellentechnologien, beschränkter Platzverhältnisse und Restriktionen bezüglich eines maximalen Gewichts einzelner Wagen bzw. einer zulässigen Achslast der Drehgestelle des Schienenfahrzeugs eine nur begrenzte Kapazität aufweisen, ist auch die mit diesen erzielbare Reichweite begrenzt. Diese begrenzte Reichweite begrenzt die Einsatzmöglichkeiten solcher Schienenfahrzeuge insbesondere im Fernverkehr.

Um die mögliche Reichweite des Schienenfahrzeugs zu erhöhen und insbesondere einen Einsatz auf vollständig nicht elektrifizierten Strecken zu ermöglichen, ist die Anordnung eines Brennstoffzellensystems an dem Schienenfahrzeug angedacht, welches mittels eines auf dem Schienenfahrzeug mitgeführten Brennstoffs, beispielsweise Wasserstoff, sowie Umgebungsluft mittels eines bekannten elektro-chemischen Prozesses elektrische Energie erzeugt. Aufgrund einer vergleichsweise langsamen möglichen Änderung der erzeugten elektrischen Energie ist ergänzend zu einem solchen Brennstoffzellensystem weiterhin eine Traktionsbatterie vorgesehen, diese kann als eine reine Pufferbatterie jedoch deutlich kleiner bzw. mit einer geringeren Speicherkapazität als eine vorstehend genannte Traktionsbatterie ausgeführt sein.

Ein Brennstoffzellensystem wird üblicherweise als ein vollständiges System verwirklicht, bei welchem alle für den Betrieb erforderlichen elektrischen und mechanischen Komponenten in einem gemeinsamen Container angeordnet sind. Mit diesem Brennstoffzellensystem ist dann lediglich der Brennstoffspeicher sowie die Traktionseinrichtung und/oder die Traktionsbatterie des Schienenfahrzeugs zu verbinden.

Das Brennstoffzellensystem umfasst dabei üblicherweise einen Kühlmittelkreislauf mit einem zirkulierenden flüssigen Kühlmittel, mittels welchem insbesondere der Brennstoffzellenstack mit seinen in Reihe geschalteten Einzelzellen gekühlt wird. Eine flüssigkeitsbasierte Kühlung ist insbesondere bei einem Brennstoffzellensystem höherer Leistung erforderlich, da dieses während des Betriebs einerseits hohe Wärmemengen erzeugt, andererseits unabhängig vom Betriebszustand ein konstantes Temperaturniveau erfordert, um eine geringe Temperaturdifferenz über den Brennstoffzellenstack zu gewährleisten.

Weitere elektrische Komponenten des Brennstoffzellensystems, insbesondere ein Luftkompressor für die Luftzufuhr, eine Pumpe für die Brennstoffförderung, ein Gleichspannungssteller für eine Anpassung des generierten Spannungsniveaus an ein Spannungsniveau der Traktionseinrichtung bzw. der Traktionsbatterie sowie eine Steuereinrichtung für die Steuerung der Komponenten des Brennstoffzellensystems besitzen hingegen andere Anforderungen hinsichtlich einer Kühlung als der Brennstoffzellenstack. Diese weiteren Komponenten werden vorzugsweise bei einer niedrigeren Temperatur als der Brennstoffzellenstack betrieben, um deren Leistungseffizienz und Lebensdauer zu erhöhen, sind andererseits jedoch auch unempfindlicher gegenüber Schwankungen der Kühlmitteltemperatur. Aufgrund der unterschiedlichen Anforderungen an die Kühlung ist für eine oder mehrere dieser elektrischen Komponenten des Brennstoffzellensystems ein gesonderter Kühlmittelkreislauf mit einem zirkulierenden flüssigen Kühlmittel vorgesehen.

Das Brennstoffzellensystem weist entsprechend für jeden der beiden Kühlmittelkreisläufe einen jeweiligen Wärmeübertrager in Form eines Luft/Wasser-Wärmeübertragers, einen oder mehrere jeweilige Lüfter, welche einen durch den Wärmeübertrager geführten forcierten Kühlluftstrom generieren, sowie eine jeweilige Kühlmittelpumpe für die Zirkulation des Kühlmittels auf. Die Kühlung des Brennstoffzellensystems erfordert somit nachteilig eine Vielzahl Komponenten, für welche ein entsprechender Raum vorgesehen werden muss.

Aus der Schrift DE 10 2013 009 749 A1 ist eine Vorrichtung zum Kühlen bzw. Temperieren einer Traktions-Stromquelle und von Elektronik-Komponenten eines mit elektrischem Strom antreibbaren Fahrzeugs bekannt. Aus der Schrift DE 10 2016 110 964 A1 ist ein Brennstoffzellen-Kühlsystem mit einem Brennstoffzellen-Kühlkreis mit einer ersten Kühleinrichtung und einem zweiten Kühlkreis mit einer zweiten Kühleinrichtung bekannt. Aus der Schrift DE 198 50 829 C1 ist ferner ein Kühl-Heiz-Kreis für ein Fahrzeug, insbesondere ein Elektrofahrzeug mit Brennstoffzelle, bekannt.

Aufgabe der vorliegenden Erfindung ist es daher, ein Schienenfahrzeug mit einem Brennstoffzellensystem anzugeben, welches eine vereinfachte Kühlung elektrischer Komponenten des Brennstoffzellensystems ermöglicht. Diese Aufgabe wird von dem Schienenfahrzeug sowie dem System gemäß den jeweiligen Merkmalen der unabhängigen Patentansprüche erfüllt. Ausgestaltungen des Schienenfahrzeugs sind in abhängigen Patentansprüchen angegeben.

Das erfindungsgemäße Schienenfahrzeug weist zumindest ein Brennstoffzellensystem mit zumindest einem Brennstoffzellenstack und zumindest einer elektrischen Komponente für dessen Betrieb auf, wobei mittels des Brennstoffzellensystems elektrische Energie generierbar ist. Weiterhin weist das Schienenfahrzeug eine Traktionseinrichtung auf, welche mittels der von dem Brennstoffzellensystem generierten elektrischen Energie betreibbar ist, wobei zumindest eine elektrische Komponente der Traktionseinrichtung mittels eines in einem ersten Kühlmittelkreislauf zirkulierenden flüssigen Kühlmittels kühlbar ist. Kennzeichnend ist die zumindest eine elektrische Komponente des Brennstoffzellensystems mittels des in dem ersten Kühlmittelkreislauf zirkulierenden flüssigen Kühlmittels kühlbar und ist mittels eines in einem zweiten Kühlmittelkreislauf zirkulierenden flüssigen Kühlmittels ausschließlich der zumindest eine Brennstoffzellenstack des Brennstoffzellensystems kühlbar, wobei das Brennstoffzellensystem und die zumindest eine elektrische Komponente der Traktionseinrichtung in unterschiedlichen Containern an einem oder unterschiedlichen Wagen des Schienenfahrzeugs angeordnet sind.

Erfindungsgemäß erfolgt somit eine Integration der Kühlung elektrischer Komponenten der Brennstoffzellensystem in die üblicherweise bereits vorhandene Kühlung elektrischer Komponenten der Traktionseinrichtung des Schienenfahrzeugs, wodurch vorteilhaft kein gesonderter Kühlmittelkreislauf für eine oder mehrere elektrische Komponenten der Brennstoffzellensystem erforderlich ist.

Vorteilhaft kann der zweite Kühlmittelkreislauf entsprechend optimal auf die Anforderungen des Brennstoffzellenstacks hinsichtlich der Kühltemperatur ausgelegt werden. Hingegen weisen üblicherweise elektrische Komponenten des Brennstoffzellensystems und elektrische Komponenten der Traktionseinrichtung gleiche oder zumindest ähnliche Anforderungen an die Kühlung auf, sodass diese problemlos mittels eines gemeinsamen Kühlkreislaufs kühlbar sind.

Einer ersten Weiterbildung der Erfindung zufolge weist das Schienenfahrzeug einen ersten Wärmeübertrager, welcher in dem ersten Kühlmittelkreislauf angeordnet ist, und einen zweiten Wärmeübertrager, welcher in dem zweiten Kühlmittelkreislauf angeordnet ist, auf, wobei der erste Wärmeübertrager und der zweite Wärmeübertrager derart angeordnet sind, dass mittels eines forcierten Kühlluftstroms sowohl das Kühlmittel in dem ersten Wärmeübertrager als auch das Kühlmittel in dem zweiten Wärmeübertrager kühlbar sind. Die Wärmeübertrager sind insbesondere als ein jeweiliger Luft/Wasser-Wärmeübertrager ausgestaltet, in welchen durchströmende Kühlluft jeweils eine Abkühlung des durch den Wärmeübertrager fließenden Kühlmittels bewirkt.

Einer auf der ersten Weiterbildung basierenden weiteren Weiterbildung zufolge ist der zweite Wärmeübertrager, in Richtung des Kühlluftstroms, dem ersten Wärmeübertrager nachgeschaltet. Durch die Nutzung eines gemeinsamen Kühlluftstroms ist ein gegenüber getrennten Wärmeübertragern geringerer Gesamtvolumenstrom erforderlich, wodurch vorteilhaft weniger leistungsfähige Lüfter oder eine geringere Anzahl von Lüftern vorgesehen werden muss, die entsprechend auch weniger elektrische Energie für deren Betrieb benötigen. Aufgrund des unterschiedlichen Temperaturniveaus der beiden Kühlmittelkreisläufe, wobei der zweite Kühlmittelkreislauf für insbesondere den Brennstoffzellenstack ein höheres Temperaturniveau als der erste Kühlmittelkreislauf aufweist, ist trotz eines Vorwärmens der Kühlluft bei Durchströmen des ersten Wärmeübertragers eine weiterhin ausreichende Kühlung des Kühlmittels in dem zweiten Kühlmittelkreislauf bzw. in dem zweiten Wärmeübertragers möglich.

Die beiden Wärmeübertrager können dabei als getrennte Komponenten des jeweiligen Kühlmittelkreislaufs verwirklicht sein, alternativ können diese jedoch ebenso als eine einzige Komponente und insbesondere in einem gemeinsamen Gehäuse verwirklicht sein.

Einer auf einer der beiden vorstehenden Weiterbildung basierenden weiteren Weiterbildung zufolge weist das Schienenfahrzeug ein steuerbares Ventil auf, welches in dem zweiten Kühlmittelkreislauf angeordnet ist und mittels welchem ein Fließen des Kühlmittels durch den zweiten Wärmeübertrager steuerbar ist.

Ein von einer Steuereinrichtung des Brennstoffzellensystems steuerbares Ventil kann beispielsweise entsprechend einem Dreiwege- oder Mischventil genannten Ventil ausgestaltet sein, mittels welchem ein Verhältnis von zwei Volumenströmen einstellbar ist. Vorteilhaft kann durch Steuerung des Volumens des flüssigen Kühlmittels, welches durch den zweiten Wärmeübertrager geführt wird, eine nahezu konstante Kühlmitteltemperatur am Eingang des Brennstoffzellenstacks während des Betriebs des Brennstoffzellensystems erzielt werden.

Einer weiteren Weiterbildung der Erfindung zufolge ist die zumindest eine elektrische Komponente der Traktionseinrichtung des Schienenfahrzeugs, welche mittels des in dem ersten Kühlmittelkreislauf zirkulierenden Kühlmittels kühlbar ist, ein Traktionsstromrichter, welcher insbesondere einen steuerbaren Traktionswechselrichter aufweist, ein Hilfsbetriebeumrichter, mittels welchem mit der Traktion zusammenhängende Hilfsbetriebe des Schienenfahrzeugs versorgbar sind, und/oder ein oder mehrere Fahrmotoren.

Einer weiteren Weiterbildung der Erfindung zufolge ist die zumindest eine elektrische Komponente des Brennstoffzellensystems, welche mittels des Kühlmittels in dem ersten Kühlmittelkreislauf kühlbar ist, ein Gleichspannungssteller, welcher insbesondere einer Wandlung des generierten Spannungsniveaus an ein Spannungsniveau der Traktionseinrichtung und/oder einer Traktionsbatterie dient, ein Luftkompressor, welcher einer Luftzufuhr zu dem Brennstoffzellenstack dient, und/oder ein Brennstofffördersystem, welches insbesondere mittels einer Pumpe den Brennstoff, beispielsweise in geeigneten Behältern gespeicherten Wasserstoff, fördert, und/oder eine Steuereinrichtung, welche insbesondere einer Steuerung der Komponenten des Brennstoffzellensystems dient.

Einer weiteren Weiterbildung der Erfindung zufolge sind die zumindest eine elektrische Komponente der Traktionseinrichtung und die zumindest eine elektrische Komponente des Brennstoffzellensystems parallel oder seriell mittels des Kühlmittels in dem ersten Kühlmittelkreislauf kühlbar. Insbesondere eine parallele Kühlung weist dabei den Vorteil auf, dass die jeweiligen elektrischen Komponenten der Traktionseinrichtung und des Brennstoffzellensystems mit Kühlmittel gleicher Temperatur gekühlt werden.

Einer auf der vorstehenden Weiterbildung basierenden weiteren Weiterbildung der Erfindung sind der erste Wärmeübertrager und der zweite Wärmeübertrager in einem zu den Containern des Brennstoffzellensystem und der zumindest einen elektrischen Komponente der Traktionseinrichtung unterschiedlichen Container an einem Wagen gemeinsam angeordnet.

Einer weiteren Weiterbildung zufolge ist das Schienenfahrzeug als ein Triebzug mit zumindest einem Wagen für einen Personentransport oder als eine Lokomotive ausgestaltet.

Ein erfindungsgemäßes System zur Generierung elektrischer Energie in einem Schienenfahrzeug weist zumindest ein Brennstoffzellensystem mit zumindest einem Brennstoffzellenstack und zumindest einer elektrischen Komponente für dessen Betrieb auf, wobei mittels des Brennstoffzellensystems elektrische Energie generierbar ist. Kennzeichnend ist ausschließlich der zumindest eine Brennstoffzellenstack des Brennstoffzellensystems mittels eines in einem zweiten Kühlmittelkreislauf zirkulierenden flüssigen Kühlmittels kühlbar, und ist die zumindest eine elektrische Komponente des Brennstoffzellensystems mittels eines in dem ersten Kühlmittelkreislauf (KMK1) zirkulierenden Kühlmittels kühlbar, wobei der erste Kühlmittelkreislauf einer Kühlung zumindest einer elektrischen Komponente einer Traktionseinrichtung des Schienenfahrzeugs dient, und wobei das Brennstoffzellensystem und die zumindest eine elektrische Komponente der Traktionseinrichtung in unterschiedlichen Containern an einem oder unterschiedlichen Wagen des Schienenfahrzeugs angeordnet sind.

Eine erfindungsgemäße Kühleinrichtung weist zumindest einen ersten Kühlmittelkreislauf mit einem darin zirkulierbaren flüssigen Kühlmittel, wobei der erste Kühlmittelkreislauf einer Kühlung zumindest einer elektrischen Komponente eines Brennstoffzellenstacks eines Brennstoffzellensystems sowie einer Kühlung zumindest einer elektrischen Komponente einer Traktionseinrichtung eines Schienenfahrzeugs dient, sowie einen zweiten Kühlmittelkreislauf mit einem darin zirkulierbaren flüssigen Kühlmittel auf, wobei der zweite Kühlmittelkreislauf ausschließlich einer Kühlung zumindest eines Brennstoffzellenstacks des Brennstoffzellensystems dient, wobei das Brennstoffzellensystem und die zumindest eine elektrische Komponente der Traktionseinrichtung in unterschiedlichen Containern an einem oder unterschiedlichen Wagen des Schienenfahrzeugs angeordnet sind.

Einer Weiterbildung der Kühleinrichtung zufolge weist diese ferner einen ersten Wärmeübertrager in dem ersten Kühlmittelkreislauf und einen zweiten Wärmeübertrager in dem zweiten Kühlmittelkreislauf auf, wobei der erste Wärmeübertrager und der zweite Wärmeübertrager derart angeordnet sind, dass mittels eines forcierten Kühlluftstroms sowohl das Kühlmittel in dem ersten Wärmeübertrager als auch das Kühlmittel in dem zweiten Wärmeübertrager kühlbar sind.

Einer auf der vorstehenden Weiterbildung basierenden weiteren Weiterbildung der Kühleinrichtung zufolge ist der zweite Wärmeübertrager, in Richtung des forcierten Kühlluftstroms, dem ersten Wärmeübertrager nachgeschaltet.

Im Folgenden wird die Erfindung anhand von Ausführungsbeispielen näher erläutert. Dabei zeigen:
- FIG 1: ein Schienenfahrzeug, und
- FIG 2: eine Kühleinrichtung.

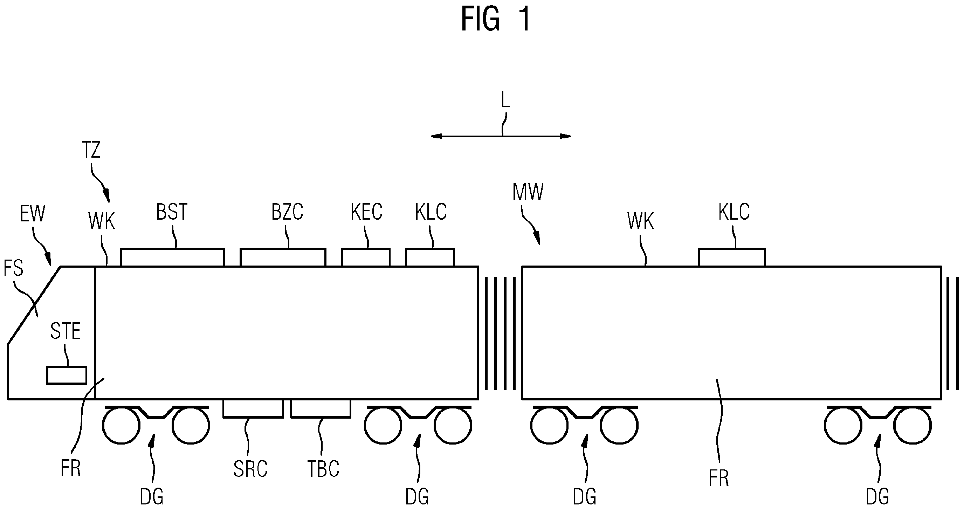

FIG 1 zeigt eine schematische Seitenansicht eines Schienenfahrzeugs, welches beispielsweise als ein Triebzug TZ mit einer Mehrzahl Wagen für die Personenbeförderung ausgestaltet ist, wobei lediglich ein erster Wagen in Form eines Endwagens EW sowie ein mit diesem Wagen gekuppelter zweiter Wagen in Form eines Mittelwagens MW dargestellt sind. Abhängig von der gewünschten Anzahl beförderbarer Personen weist der Triebzug zwei Endwagen sowie eine Anzahl Mittelwagen auf, wobei dieser alternativ auch aus lediglich zwei Endwagen bestehen kann. Ferner kann das Schienenfahrzeug lediglich einen einzigen Wagen aufweisen oder als eine Lokomotive ausgestaltet sein. Die in der FIG 1 dargestellten Endwagen EW und Mittelwagen MW verfügen jeweils über einen Wagenkasten WK, der sich über zwei Drehgestelle DG in Form von Trieb- oder Laufdrehgestellen auf nicht dargestellten

Schienen abstützt. Alternativ zu dieser Anordnung von Drehgestellen können sich das hintere, rechte Ende des Endwagens EW und das vordere, linke Ende des Mittelwagens MW auch auf einem gemeinsamen Drehgestell, insbesondere auf einem so genannten Jakobs-Drehgestell, abstützen. Der Endwagen EW ist bezüglich der Längsachse L bzw. horizontalen Achse beispielhaft in mehrere räumliche Bereiche unterteilt. Diese Bereiche sind zum einen ein Führerstand FS im vorderen Bereich, zum anderen ein an den Führerstand FS angrenzender Fahrgastraum FR, in welchem insbesondere Sitzmöglichkeiten für Fahrgäste vorgesehen sind. Der Mittelwagen MW weist im Unterschied zum Endwagen EW ausschließlich einen Fahrgastraum FR. Die Fahrgasträume FR der Wagen EW, MW können von Fahrgästen über in Seitenwänden des jeweiligen Wagenkastens WK angeordnete, nicht dargestellte Türen betreten und verlassen werden. Weiterhin können Fahrgäste über einen Wagenübergang in den Fahrgastraum eines jeweils benachbarten Wagens gelangen. Ein derartiger Wagenübergang ist üblicherweise durch einen Wellen- oder Faltenbalg vor Umwelteinflüssen geschützt.

Auf dem Dach sowie unter dem Boden bzw. im Unterflurbereich des Wagenkastens WK des Endwagens EW sind beispielhaft mehrere Container für elektrische Geräte als Teil der elektrischen Ausrüstung des Triebzugs TZ angeordnet. Diese dienen beispielsweise dem Antrieb bzw. der Traktion des Triebzugs TZ, insbesondere der Versorgung in FIG 1 nicht speziell dargestellter Fahrmotoren.

Im Unterflurbereich des Endwagens EW ist in einem Container SRC ein Traktionsstromrichter angeordnet, welcher die Fahrmotoren mit elektrischer Energie versorgt. Die Fahrmotoren sind beispielsweise in dem als ein Triebdrehgestell ausgestalteten vorderen Drehgestell DG des Endwagens EW angeordnet, wobei in weiteren Drehgestellen des Triebzugs TZ, insbesondere abhängig von der benötigten maximalen Antriebsleistung, weitere Fahrmotoren angeordnet sein können.

In einem weiteren Container TBC im Unterflurbereich des Endwagens EW ist ein elektrischer Energiespeicher in Form einer Traktionsbatterie TB bzw. einer Pufferbatterie angeordnet, welche beispielsweise über einen Gleichspannungssteller mit einem Gleichspannungs-Zwischenkreis des Traktionsstromrichters verbunden ist.

Auf dem Dach des Endwagens EW ist ein Brennstoffspeicher BSS, in welchem beispielsweise flüssiger Wasserstoff gespeichert ist, sowie ein Container BZC angeordnet, in welchem mechanische und elektrische Komponenten eines Brennstoffzellensystems angeordnet sind. Schließlich ist auf dem Dach des Endwagens in einem weiteren Container KEC eine Kühleinrichtung KE angeordnet.

Auf den Dächern der Wagen EW, MW sind beispielhaft weiterer Container KLC angeordnet, in denen eine jeweilige Klimatisierungseinrichtung für die Klimatisierung des jeweiligen Fahrgastraums bzw. der Fahrgasträume angeordnet ist.

Neben den genannten Komponenten der elektrischen Ausrüstung des Triebzugs TZ können weitere Komponenten, insbesondere eine Steuereinrichtung STE für die Steuerung Traktionseinrichtung, weitere Hilfsbetriebe sowie Einrichtungen zu deren Versorgung in gleicher Weise in Containern im Dach- oder Unterflurbereich der Wagen oder auch in deren jeweiligen Innenraum angeordnet sein. Auch ist die dargestellte Anordnung der genannten Komponenten rein beispielhaft.

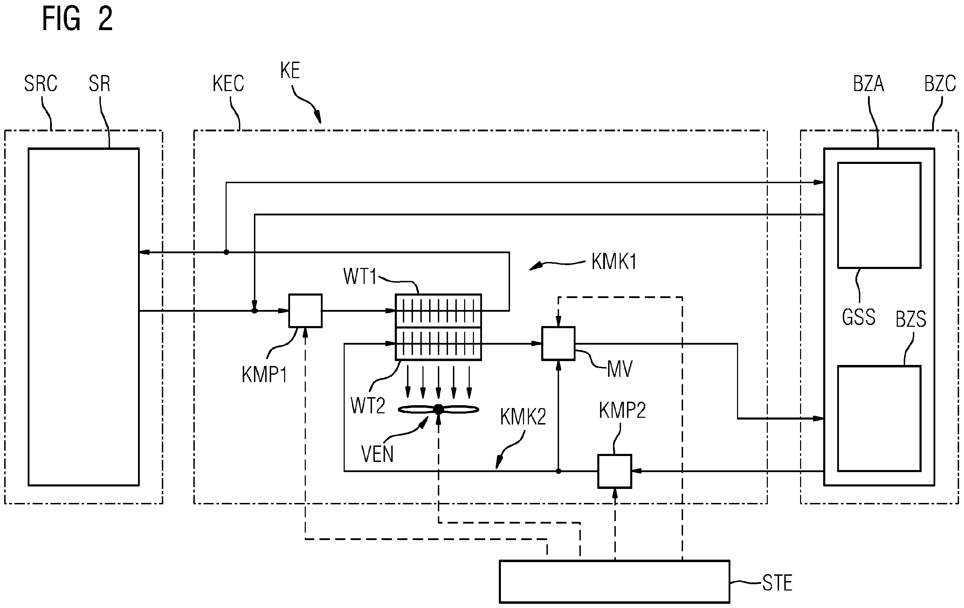

FIG 2 zeigt ein schematisches Ausführungsbeispiel des ersten und zweiten Kühlmittelkreislaufs KMK1 bzw. KMK2 in einer beispielhaften Kühleinrichtung KE. Diese Kühleinrichtung KE bzw. die Kühlmittelkreisläufe KMK1, KMK2 sind mittels geeigneter Leitungen, Rohre oder Schläuche einerseits mit einem Brennstoffzellensystem BZS, andererseits beispielhaft mit einem Traktionsstromrichter SR als eine beispielhafte elektrische Komponente der Traktionseinrichtung des Triebzugs TZ verbunden. Die Kühleinrichtung KE ist entsprechend der FIG 1 in einem Kühleinrichtungscontainer KEC auf dem Dach des Endwagens EW des Triebzugs TZ angeordnet, während das Brennstoffzellensystem BZS in einem gesonderten Brennstoffzellencontainer BZC auf dem Dach des Endwagens EW angeordnet ist, und der Traktionsstromrichter SR in einem Stromrichtercontainer SRC im Unterflurbereich des Endwagens EW angeordnet ist. Die Container sind dabei schematisch durch eine jeweilige strich-punktierte Linie begrenzt.

In dem unteren Zweig des ersten Kühlmittelkreislaufs KMK1 ist eine geeignet ausgestaltete erste Kühlmittelpumpe KMP1 angeordnet, deren Betrieb eine Zirkulation des flüssigen Kühlmittels bewirkt. Die Förderleistung der ersten Kühlmittelpumpe KMP1 ist beispielsweise von der Steuereinrichtung STE, insbesondere abhängig von einem ermittelten Kühlbedarf über eine geeignete Steuerleitung steuerbar. In dem Stromrichter SR erwärmtes Kühlmittel fließt durch einen ersten Wärmeübertrager WT1, welcher als ein Luft/Wasser-Wärmeübertrager ausgestaltet ist. In diesem wird das durchfließende Kühlmittel durch einen durchströmenden forcierten Kühlluftstrom gekühlt. Der forcierte Kühlluftstrom wird beispielsweise mittels eines oder mehrerer Lüfter VEN generiert, deren Leistung ebenfalls von der Steuereinrichtung STE steuerbar ist und die geeignet relativ zu dem ersten Wärmeübertrager WT1 angeordnet sind. Das in dem ersten Wärmeübertrager WT1 mittels des Kühlluftstroms abgekühlte Kühlmittel fließt anschließend in dem oberen Zweig des ersten Kühlmittelkreislaufs KMK1 in den Stromrichter SR zurück. Mittels zumindest eines geeigneten Temperatursensors kann beispielsweise die Temperatur des Kühlmittels nach Durchfließen des ersten Wärmeübertragers WT1 gemessen werden, welche von der Steuereinrichtung STE für die Steuerung der ersten Kühlmittelpumpe KMP1 und/oder des bzw. der Lüfter VEN berücksichtigt wird.

In der FIG 2 ist ausgehend von dem oberen Zweig des ersten Kühlmittelkreislaufs KMK1 ein weiterer Zweig vorgesehen, über welchen das Kühlmittel der zumindest einen elektrischen Komponente des Brennstoffzellensystem BZS zugeführt wird. Im Beispiel der FIG 2 ist dies ein Gleichspannungssteller GSS, welcher eine Ausgangsspannung auf beispielsweise eine vorgegebene Spannung des Zwischenkreises des Stromrichters SR wandelt. Das in dem Gleichspannungssteller GSS erwärmte Kühlmittel strömt anschließend in den unteren Zweig des ersten Kühlmittelkreislaufs KMK1 zurück.

Neben der beispielhaft dargestellten parallelen Speisung sowohl des Stromrichters SR als auch des Gleichspannungsstellers GSS mit dem zirkulierenden Kühlmittel können diese auch seriell gespeist werden, wobei vorzugsweise die elektrische Komponente mit dem geringeren Kühlbedarf, einer niedrigeren Betriebstemperatur oder einer größeren Temperaturunempfindlichkeit bzw. deren Kühlkörper zuerst von dem Kühlmittel durchflossen wird.

In dem unteren Zweig des zweiten Kühlmittelkreislaufs KMK2 ist eine geeignet ausgestaltete zweite Kühlmittelpumpe KMP2 angeordnet, deren Betrieb eine Zirkulation des flüssigen Kühlmittels bewirkt. Die Förderleistung der zweiten Kühlmittelpumpe KMP2 ist beispielsweise ebenfalls von der Steuereinrichtung STE, insbesondere abhängig von einem ermittelten Kühlbedarf über eine geeignete Steuerleitung steuerbar. Das beispielsweise in dem Brennstoffzellenstack BST erwärmte Kühlmittel fließt durch einen zweiten Wärmeübertrager WT2, welcher wie der erste Wärmeübertrager WT1 als ein Luft/Wasser-Wärmeübertrager ausgestaltet ist. Der zweite Wärmeübertrager WT2 ist dabei derart angeordnet, dass der mittels des zumindest einen Lüfters VEN generierte forcierten Kühlluftstrom zunächst den ersten Wärmeübertrager WT1 durchströmt und das in dem ersten Kühlmittelkreislauf KMK1 zirkulierende Kühlmittel kühlt, und erst anschließend in dem zweiten Wärmeübertrager WT2 das in dem zweiten Kühlmittelkreislaufs KMK2 zirkulierende Kühlmittel kühlt.

Diese Anordnung stellt jedoch keine Beeinträchtigung der Funktion des zweiten Wärmeübertragers WT2 dar, da das Kühlmittel in dem zweiten Kühlmittelkreislauf KMK2 grundsätzlich eine höhere Temperatur als das Kühlmittel in dem ersten Kühlmittelkreislauf aufweist.

Die beiden Wärmeübertrager WT1, WT2 können als getrennte Komponenten verwirklicht sein, alternativ können sie jedoch ebenso als eine einzige Komponente und insbesondere in einem gemeinsamen Gehäuse verwirklicht sein. Weiterhin kann bei einem deutlich unterschiedlichen Kühlbedarf beispielsweise der zweite Wärmeübertrager WT2 auch größer als der erste Wärmeübertrager WT1 ausgeführt sein, sodass ein Teil des forcierten Kühlluftstroms ausschließlich durch den zweiten Wärmeübertrager WT2 geführt wird.

Parallel zum zweiten Wärmeübertrager WT2 ist beispielhaft ein Zweig in dem zweiten Kühlmittelkreislauf KMK2 vorgesehen, welcher ein Fließen des Kühlmittels an dem zweiten Wärmeübertrager WT2 vorbei ermöglicht. Mittels eines geeignete ausgestalteten Ventils MV kann von der Steuereinrichtung STE die jeweilige Flussmenge durch zweiten Wärmeübertrager WT2 und an diesem vorbei gesteuert werden. Dies kann beispielsweise mit dem Ziel erfolgen, dass die Temperatur des Kühlmittels, welches in dem oberen Zweig des zweiten Kühlmittelkreislaufs KMK2 zu dem Brennstoffzellenstack BST fließt, eine konstante Temperatur aufweist, welche wiederum durch zumindest einen geeigneten Temperatursensor durch die Steuereinrichtung STE überwacht werden kann.

Die beispielhaft in den beiden Kühlmittelkreisläufen KMK1, KMK2 der FIG 2 angegebenen Komponenten müssen nicht zwingend in dem Kühleinrichtungscontainer KEC angeordnet sein. So können die Kühlmittelpumpen KMP1, KMP2 jeweils auch in dem Container BZC des Brennstoffzellensystem BZS bzw. in dem Container SRC des Traktionsstromrichters SR angeordnet sein. Weiterhin weisen, sofern erforderlich, die Kühlmittelkreisläufe KMK1, KMK2 ergänzend einen nicht dargestellten jeweiligen Ausgleichbehälter auf, welcher eine permanente vollständige Befüllung des jeweiligen Kühlmittelkreislaufs mit flüssigem Kühlmittel, beispielsweise Wasser, sicherstellt.

## Patentansprüche

1. Schienenfahrzeug, zumindest aufweisend:
- ein Brennstoffzellensystem (BZS) mit zumindest einem Brennstoffzellenstack (BST) und zumindest einer elektrischen Komponente (GSS) für dessen Betrieb, wobei mittels des Brennstoffzellensystems (BZS) elektrische Energie generierbar ist,
- eine Traktionseinrichtung, welche mittels der von dem Brennstoffzellensystem (BZS) generierten elektrischen Energie betreibbar ist, wobei zumindest eine elektrische Komponente (SR) der Traktionseinrichtung mittels eines in einem ersten Kühlmittelkreislauf (KMK1) zirkulierenden flüssigen Kühlmittels kühlbar ist,
**dadurch gekennzeichnet, dass**
- die zumindest eine elektrische Komponente (GSS) des Brennstoffzellensystems (BZS) mittels des in dem ersten Kühlmittelkreislauf (KMK1) zirkulierenden flüssigen Kühlmittels kühlbar ist, und
- mittels eines in einem zweiten Kühlmittelkreislauf (KMK2) zirkulierenden flüssigen Kühlmittels ausschließlich der zumindest eine Brennstoffzellenstack (BST) des Brennstoffzellensystems (BZS) kühlbar ist,
wobei das Brennstoffzellensystem (BZS) und die zumindest eine elektrische Komponente (SR) der Traktionseinrichtung in unterschiedlichen Containern (BZC, SRC) an einem oder unterschiedlichen Wagen (EW) des Schienenfahrzeugs angeordnet sind.

2. Schienenfahrzeug nach Anspruch 1, ferner aufweisend:
- einen ersten Wärmeübertrager (WT1), welcher in dem ersten Kühlmittelkreislauf (KMK1) angeordnet ist, und
- einen zweiten Wärmeübertrager (WT2), welcher in dem zweiten Kühlmittelkreislauf (KMK2) angeordnet ist,
wobei der erste Wärmeübertrager (WT1) und der zweite Wärmeübertrager (WT2) derart angeordnet sind, dass mittels eines forcierten Kühlluftstroms sowohl das Kühlmittel in dem ersten Wärmeübertrager (WT1) als auch das Kühlmittel in dem zweiten Wärmeübertrager (WT2) kühlbar sind.

3. Schienenfahrzeug nach Anspruch 2, wobei
der zweite Wärmeübertrager (WT2), in Richtung des forcierten Kühlluftstroms, dem ersten Wärmeübertrager (WT1) nachgeschaltet ist.

4. Schienenfahrzeug nach Anspruch 2 oder 3,
ferner aufweisend:
ein steuerbares Ventil (MV), welches in dem zweiten Kühlmittelkreislauf (KMK2) angeordnet ist und mittels welchem ein Fließen des Kühlmittels durch den zweiten Wärmeübertrager (WT2) steuerbar ist.

5. Schienenfahrzeug nach einem der vorstehenden Ansprüche, **dadurch gekennzeichnet, dass**
die zumindest eine elektrische Komponente der Traktionseinrichtung einen Traktionsstromrichter (SR), einen Hilfsbetriebeumrichter und/oder zumindest einen Fahrmotor umfasst.

6. Schienenfahrzeug nach einem der vorstehenden Ansprüche, **dadurch gekennzeichnet, dass**
die zumindest eine elektrische Komponente des Brennstoffzellensystems (BZS) einen Gleichspannungssteller (GSS), einen Luftkompressor, ein Brennstofffördersystem und/oder eine Steuereinrichtung umfasst.

7. Schienenfahrzeug nach einem der vorstehenden Ansprüche, **dadurch gekennzeichnet, dass**
die zumindest eine elektrische Komponente der Traktionseinrichtung und die zumindest eine elektrische Komponente des Brennstoffzellensystems (BZS) parallel oder seriell mittels des Kühlmittels in dem ersten Kühlmittelkreislauf (KMK1) kühlbar sind.

8. Schienenfahrzeug nach Anspruch 1 und Anspruch 2 oder 3, **dadurch gekennzeichnet, dass**
der erste Wärmeübertrager (WT1) und der zweite Wärmeübertrager (WT2) in einem zu den Containern (BZC, SRC) des Brennstoffzellensystems (BZS) und der zumindest einen elektrischen Komponente (SR) der Traktionseinrichtung unterschiedlichen Container (KEC) an einem Wagen (EW) gemeinsam angeordnet sind.

9. Schienenfahrzeug nach einem der vorstehenden Ansprüche, **dadurch gekennzeichnet, dass**
es als ein Triebzug (TZ) mit zumindest einem Wagen (EW, MW) für einen Personentransport oder als eine Lokomotive ausgestaltet ist.

10. System zur Generierung elektrischer Energie für ein Schienenfahrzeug, zumindest aufweisend:
ein Brennstoffzellensystem (BZS) mit zumindest einem Brennstoffzellenstack (BST) und zumindest einer elektrischen Komponente (GSS) für dessen Betrieb, wobei mittels des Brennstoffzellensystems (BZS) elektrische Energie generierbar ist,
**dadurch gekennzeichnet, dass**
- ausschließlich der zumindest eine Brennstoffzellenstack (BST) des Brennstoffzellensystems (BZS) mittels eines in einem zweiten Kühlmittelkreislauf (KMK2) zirkulierenden flüssigen Kühlmittels kühlbar ist, und
- die zumindest eine elektrische Komponente (GSS) des Brennstoffzellensystems (BZS) mittels eines in dem ersten Kühlmittelkreislauf (KMK1) zirkulierenden Kühlmittels kühlbar ist, wobei der erste Kühlmittelkreislauf (KMK1) einer Kühlung zumindest einer elektrischen Komponente (SR) einer Traktionseinrichtung des Schienenfahrzeugs dient, und wobei das Brennstoffzellensystem (BZS) und die zumindest eine elektrische Komponente (SR) der Traktionseinrichtung in unterschiedlichen Containern (BZC, SRC) an einem oder unterschiedlichen Wagen (EW) des Schienenfahrzeugs angeordnet sind.

11. Kühleinrichtung (KE), zumindest aufweisend:
- einen ersten Kühlmittelkreislauf (KMK1) mit einem darin zirkulierbaren flüssigen Kühlmittel, wobei der erste Kühlmittelkreislauf einer Kühlung zumindest einer elektrischen Komponente eines Brennstoffzellenstacks (BST) eines Brennstoffzellensystems (BZS) sowie einer Kühlung zumindest einer elektrischen Komponente (SR) einer Traktionseinrichtung eines Schienenfahrzeugs dient, und
- einen zweiten Kühlmittelkreislauf (KMK2) mit einem darin zirkulierbaren flüssigen Kühlmittel, wobei der zweite Kühlmittelkreislauf (KMK2) ausschließlich einer Kühlung zumindest eines Brennstoffzellenstacks (BST) des Brennstoffzellensystems dient,
wobei das Brennstoffzellensystem (BZS) und die zumindest eine elektrische Komponente (SR) der Traktionseinrichtung in unterschiedlichen Containern (BZC, SRC) an einem oder unterschiedlichen Wagen (EW) des Schienenfahrzeugs angeordnet sind.

12. Kühleinrichtung (KE) nach Anspruch 11,
ferner aufweisend:
- einen ersten Wärmeübertrager (WT1) in dem ersten Kühlmittelkreislauf (KMK1), und
- einen zweiten Wärmeübertrager (WT2) in dem zweiten Kühlmittelkreislauf (KMK2),
wobei der erste Wärmeübertrager (WT1) und der zweite Wärmeübertrager (WT2) derart angeordnet sind, dass mittels eines forcierten Kühlluftstroms sowohl das Kühlmittel in dem ersten Wärmeübertrager (WT1) als auch das Kühlmittel in dem zweiten Wärmeübertrager (WT2) kühlbar sind.

13. Kühleinrichtung (KE) nach Anspruch 12, wobei
der zweite Wärmeübertrager (WT2), in Richtung des forcierten Kühlluftstroms, dem ersten Wärmeübertrager (WT1) nachgeschaltet ist.

## Claims

1. Rail vehicle, at least having:
- a fuel cell system (BZS) with at least one fuel cell stack (BST) and at least one electrical component (GSS) for the operation thereof, wherein electrical energy can be generated by means of the fuel cell system (BZS),
- a traction device, which can be operated by means of the electrical energy generated by the fuel cell system (BZS), wherein at least one electrical component (SR) of the traction device can be cooled by means of a liquid coolant circulating in a first coolant circuit (KMK1),
**characterised in that**
- the at least one electrical component (GSS) of the fuel cell system (BZS) can be cooled by means of the liquid coolant circulating in the first coolant circuit (KMK1), and
- exclusively the at least one fuel cell stack (BST) of the fuel cell system (BZS) can be cooled by means of a liquid coolant circulating in a second coolant circuit (KMK2),
wherein the fuel cell system (BZS) and the at least one electrical component (SR) of the traction device are arranged in different containers (BZC, SRC) on one or different cars (EW) of the rail vehicle.

2. Rail vehicle according to claim 1, further having:
- a first heat exchanger (WT1), which is arranged in the first coolant circuit (KMK1), and
- a second heat exchanger (WT2), which is arranged in the second coolant circuit (KMK2),
wherein the first heat exchanger (WT1) and the second heat exchanger (WT2) are arranged in such a manner that both the coolant in the first heat exchanger (WT1) and the coolant in the second heat exchanger (WT2) can be cooled by means of a forced cooling air flow.

3. Rail vehicle according to claim 2, wherein
the second heat exchanger (WT2) is downstream of the first heat exchanger (WT1) in the direction of the forced cooling air flow.

4. Rail vehicle according to claim 2 or 3,
further having:
a controllable valve (MV), which is arranged in the second coolant circuit (KMK2) and by means of which it is possible to control a flow of the coolant through the second heat exchanger (WT2).

5. Rail vehicle according to one of the preceding claims, **characterised in that**
the at least one electrical component of the traction device comprises a traction current converter (SR), an auxiliary operation converter and/or at least one traction motor.

6. Rail vehicle according to one of the preceding claims, **characterised in that**
the at least one electrical component of the fuel cell system (BZS) comprises a DC voltage converter (GSS), an air compressor, a fuel conveying system and/or a control device.

7. Rail vehicle according to one of the preceding claims, **characterised in that**
the at least one electrical component of the traction device and the at least one electrical component of the fuel cell system (BZS) can be cooled in parallel or in series by means of the coolant in the first coolant circuit (KMK1).

8. Rail vehicle according to claim 1 and claim 2 or 3, **characterised in that**
the first heat exchanger (WT1) and the second heat exchanger (WT2) are arranged together in a container (KEC) on a car (EW) which differs from the containers (BZC, SRC) of the fuel cell system (BZS) and the at least one electrical component (SR) of the traction device.

9. Rail vehicle according to one of the preceding claims, **characterised in that**
it is embodied as a multiple unit (TZ) with at least one car (EW, MW) for passenger transport or as a locomotive.

10. System for generating electrical energy for a rail vehicle, at least having:
a fuel cell system (BZS) with at least one fuel cell stack (BST) and at least one electrical component (GSS) for the operation thereof, wherein electrical energy can be generated by means of the fuel cell system (BZS),
**characterised in that**
- exclusively the at least one fuel cell stack (BST) of the fuel cell system (BZS) can be cooled by means of a liquid coolant circulating in a second coolant circuit (KMK2), and
- the at least one electrical component (GSS) of the fuel cell system (BZS) can be cooled by means of a coolant circulating in the first coolant circuit (KMK1), wherein the first coolant circuit (KMK1) is used to cool at least one electrical component (SR) of a traction device of the rail vehicle, and
wherein the fuel cell system (BZS) and the at least one electrical component (SR) of the traction device are arranged in different containers (BZC, SRC) on one or different cars (EW) of the rail vehicle.

11. Cooling device (KE), at least having:
- a first coolant circuit (KMK1) with a liquid coolant that is able to circulate therein, wherein the first coolant circuit is used to cool at least one electrical component of a fuel cell stack (BST) of a fuel cell system (BZS) as well as to cool at least one electrical component (SR) of a traction device of a rail vehicle, and
- a second coolant circuit (KMK2) with a liquid coolant that is able to circulate therein, wherein the second coolant circuit (KMK2) is exclusively used to cool at least one fuel cell stack (BST) of the fuel cell system,
wherein the fuel cell stack (BZS) and the at least one electrical component (SR) of the traction device are arranged in different containers (BZC, SRC) on one or different cars (EW) of the rail vehicle.

12. Cooling device (KE) according to claim 11,
further having:
- a first heat exchanger (WT1) in the first coolant circuit (KMK1), and
- a second heat exchanger (WT2) in the second coolant circuit (KMK2) ,
wherein the first heat exchanger (WT1) and the second heat exchanger (WT2) are arranged in such a manner that both the coolant in the first heat exchanger (WT1) and the coolant in the second heat exchanger (WT2) can be cooled by means of a forced cooling air flow.

13. Cooling device (KE) according to claim 12, wherein
the second heat exchanger (WT2) is downstream of the first heat exchanger (WT1) in the direction of the forced cooling air flow.

## Revendications

1. Véhicule ferroviaire, comportant au moins :
- un système (BZS) de piles à combustible comprenant au moins un empilement (BST) de piles à combustible et au moins un composant (GSS) électrique pour son fonctionnement, dans lequel de l'énergie électrique peut être créée au moyen du système (BZS) de piles à combustible,
- un dispositif de traction, qui peut fonctionner au moyen de l'énergie créée par le système (BZS) de piles à combustible, dans lequel au moins un composant (SR) électrique du dispositif de traction peut être refroidi au moyen d'un fluide réfrigérant liquide circulant dans un premier circuit (KMK1) de fluide réfrigérant,
**caractérisé en ce que**
- le au moins un composant (GSS) électrique du système (BZS) de pile à combustible peut être refroidi au moyen du fluide réfrigérant liquide circulant dans le premier circuit (KMK1) de fluide réfrigérant, et
- au moyen d'un fluide réfrigérant liquide, circulant dans un deuxième circuit (KMK2) de fluide réfrigérant, exclusivement le au moins un empilement (BST) de piles à combustible du système (BZS) de piles à combustible peut être refroidi,
dans lequel le système (BZS) de piles à combustible et le au moins un composant (SR) électrique du dispositif de traction sont disposés dans des conteneurs (BZC, SRC) différents, sur une voiture ou des voitures (EW) différentes du véhicule ferroviaire.

2. Véhicule ferroviaire suivant la revendication 1, comportant :
- un premier échangeur de chaleur (WT1), qui est monté dans le premier circuit (KMK1) de fluide réfrigérant, et
- un deuxième échangeur de chaleur (WT2), qui est monté dans un deuxième circuit (KMK2) de fluide réfrigérant,
dans lequel le premier échangeur de chaleur (WT1) et le deuxième échangeur de chaleur (WT2) sont disposés de manière à ce qu'au moyen d'un courant d'air de refroidissement forcé, tant le fluide réfrigérant dans le premier échangeur de chaleur (WT1), qu'également le fluide réfrigérant dans le deuxième échangeur de chaleur (WT2) peuvent être refroidis.

3. Véhicule ferroviaire suivant la revendication 2, dans lequel le deuxième échangeur de chaleur (WT2) est monté en aval, dans le sens du courant d'air de refroidissement forcé, du premier échangeur de chaleur (WT1).

4. Véhicule ferroviaire suivant la revendication 2 ou 3, comportant en outre :
une vanne (MV) qui peut être commandée, qui est montée dans le deuxième circuit (KMK2) de fluide réfrigérant et au moyen de laquelle un écoulement du fluide réfrigérant dans le deuxième échangeur de chaleur (WT2) peut être réglé.

5. Véhicule ferroviaire suivant l'une des revendications précédentes,
**caractérisé en ce que**
le au moins un composant électrique du dispositif de traction comprend un convertisseur (SR) de traction, un convertisseur de fonctionnement auxiliaire et/ou au moins un moteur de traction.

6. Véhicule ferroviaire suivant l'une des revendications précédentes,
**caractérisé en ce que**
le au moins un composant électrique du système (BZS) de piles à combustible comprend un régleur (GSS) de tension continue, un compresseur d'air, un système de conduite de combustible et/ou un dispositif de commande.

7. Véhicule ferroviaire suivant l'une des revendications précédentes,
**caractérisé en ce que**
le au moins un composant électrique du dispositif de traction et le au moins un composant électrique du système (BZS) de piles à combustible peuvent être refroidis en parallèle ou en série, au moyen du fluide réfrigérant dans le premier circuit (KMK1) de fluide réfrigérant.

8. Véhicule ferroviaire suivant la revendication 1 et la revendication 2 ou 3,
**caractérisé en ce que**
le premier échangeur de chaleur (WT1) et le deuxième échangeur de chaleur (WT2) sont disposés conjointement sur un wagon (EW) dans un conteneur (KEC) différent des conteneurs (BZC, SRC) du système (BZS) de piles à combustible et du au moins un composant (SR) électrique du dispositif de traction.

9. Véhicule ferroviaire suivant l'une des revendications précédentes,
**caractérisé en ce qu'**
il est conformé en motrice (TZ), comprenant au moins une voiture (EW, MW) de transport des voyageurs ou en locomotive.

10. Système de production d'énergie électrique pour un véhicule ferroviaire, comportant au moins :
un système (BZS) de piles à combustible comprenant au moins un empilement (BST) de piles à combustible et au moins un composant (GSS) électrique pour son fonctionnement, dans lequel de l'énergie électrique peut être créée au moyen du système (BZS) de piles à combustible,
**caractérisé en ce que**
- exclusivement le au moins un empilement (BST) de piles à combustible du système (BZS) de piles à combustible peut être refroidi au moyen d'un fluide réfrigérant circulant dans un deuxième circuit (KMK2) de fluide réfrigérant, et
- le au moins un composant (GSS) électrique du système (BZS) de piles à combustible peut être refroidi au moyen d'un fluide réfrigérant circulant dans le premier circuit (KMK1) de fluide réfrigérant, dans lequel le premier circuit (KMK1) de fluide réfrigérant sert à un refroidissement d'au moins un composant (SR) électrique d'un dispositif de traction du véhicule ferroviaire, et dans lequel le système (BZS) de pile à combustible et le au moins un composant (SR) électrique d'un dispositif de traction sont disposés dans des conteneurs (BZC, SRC) différents sur une ou des voitures (EW) différentes du véhicule ferroviaire.

11. Dispositif (KE) de refroidissement, comportant au moins :
- un premier circuit (KMK1) de fluide réfrigérant ayant un fluide réfrigérant, qui peut y circuler, dans lequel le premier circuit de fluide réfrigérant sert au refroidissement d'au moins un composant électrique d'un empilement (BST) de piles à combustible d'un système (BZS) de piles à combustible, ainsi qu'au refroidissement d'un composant (SR) électrique d'un dispositif de traction d'un véhicule ferroviaire, et
- un deuxième circuit (KMK2) de fluide réfrigérant ayant un fluide réfrigérant liquide, qui peut y circuler, dans lequel le deuxième circuit (KMK2) de fluide réfrigérant sert exclusivement du refroidissement d'au moins un empilement (BST) de piles à combustible du système de piles à combustible,
dans lequel le système (BZS) de piles à combustible et le au moins un composant (SR) électrique du dispositif de traction sont disposés dans des conteneurs (BZC, SRC) différents sur une ou des voitures (EW) différentes du véhicule ferroviaire.

12. Dispositif (KE) de refroidissement suivant la revendication 11,
comportant en outre :
- un premier échangeur de chaleur (WT1) dans le premier circuit (KMK1) de fluide réfrigérant, et
- un deuxième échangeur de chaleur (WT2) dans le deuxième circuit (KMK2) de fluide réfrigérant,
dans lequel le premier échangeur de chaleur (WT1) et le deuxième échangeur de chaleur (WT2) sont disposés de manière à ce qu'au moyen d'un courant d'air de refroidissement forcé, tant le fluide réfrigérant dans le premier échangeur de chaleur (WT1), qu'également le fluide réfrigérant dans le deuxième échangeur de chaleur (WT2) peuvent être refroidis.

13. Dispositif (KE) de refroidissement suivant la revendication 12, dans lequel
le deuxième échangeur de chaleur (WT2) est monté en aval, dans le sens du courant d'air de refroidissement forcé, du premier échangeur de chaleur (WT1).
